# EUROPEAN PATENT SPECIFICATION

(11) **EP 1 983 028 B1**
(45) Date of publication and mention of the grant of the patent: **15.08.2012**
(21) Application number: 07708015.8
(22) Date of filing: 05.02.2007
(51) Int. Cl.: C08K 5/21, C08K 5/405, C08L 25/04, C08J 9/00, C08K 5/00

(54) **FLAME-RETARDANT STYRENE RESIN COMPOSITION**
FLAMMWIDRIGE STYROLHARZZUSAMMENSETZUNG
COMPOSITION DE RESINE DE STYRENE IGNIFUGE

(30) Priority: 10.02.2006 JP 2006034009
(43) Date of publication of application: 22.10.2008
(73) Proprietor: Dai-Ichi Kogyo Seiyaku Co., Ltd., Kyoto-shi, Kyoto 600-8873 (JP)
(72) Inventor: ONISHI, Hideaki, Otsu-shi Shiga 520-0815 (JP); MORISHITA, Ken, Kyoto-shi Kyoto 615-8003 (JP)
(74) Representative: Reitstötter - Kinzebach
(86) International application number: PCT/JP2007/051896
(87) International publication number: WO 2007/091504

(56) References cited:
- JP-A- 09 087 484
- JP-A- 09 194 678
- JP-A- 2000 026 699
- JP-A- 2000 119 477
- JP-A- 2004 161 868
- JP-A- 2005 145 988
- JP-A- 2005 162 915
- JP-A- 2005 272 646
- CULLIS C F ET AL: "Studies of the effects of phosphorus-nitrogen-bromine systems on the combustion of some thermoplastic polymers", EUROPEAN POLYMER JOURNAL, PERGAMON PRESS LTD. OXFORD, GB, vol. 27, no. 3, 1 January 1991 (1991-01-01), pages 281-289, XP024052958, ISSN: 0014-3057, DOI: DOI:10.1016/0014-3057(91)90107-Y [retrieved on 1991-01-01]

## Description

### FIELD OF THE INVENTION

This invention relates to flame retarding technology for styrene-based resins represented by polystyrene. The flame-retarded styrene-based resin compositions according to the present invention find use in fabricating, for example, electric and electronic parts requiring flame retardancy using injection-molding technology. Foamed products may be fabricated from the flame-retarded styrene-based resin composition of the present invention for use as, for example, heat-insulating materials and floor matting materials and also as sheeting for use in soil piling technology.

### BACKGROUND ART

Styrene-based resins represented by polystyrene are a relatively cheap and easily moldable plastic material having excellent electro-insulation resistance, water resistance and mechanical strength properties, and are being in use in many applications. Because polystyrene consists solely of carbon and hydrogen atoms, it is flammable and burns rapidly with evolution of black smoke once ignited. Accordingly, it is imperative in some application fields to render the resin flame-retarded by the addition of a flame retardant so that the flame retarded products meet the requirements under a standard applicable to the respective field of use. The UL standard (Underwriters Laboratories, U.S.A.) is one of such standards which is applicable to plastic products used in the electric and electronic fields.

Most commonly used flame retardants for plastic materials are bromine-containing organic compounds. A large number of bromine-containing flame retardants are commercially available and being in use at present. However, the flame retardants tend to deteriorate other important properties such as mechanical strength properties and also darken the shaped articles due to the thermal decomposition upon heating to the processing temperature. Since these adverse effects increase with increase in the amount of addition of the flame retardants, it is desirable to achieve a desired flame retardancy level with a minimum amount of the flame retardants.

As strong demands for safety against fire are increasing in recent years, various flame retardancy standards including the UL standard are becoming more stringent. In order to achieve a desired flame retardancy level with as small as possible amount of the flame retardant, it is effective to use a compound such as hexabromocylododecane (HBCD) or tetrabromocyclooctane (TBCO) in which all bromine atoms are attached to an aliphatic carbon atom. However, these compounds are thermally unstable and result in coloring of shaped articles and present corrosion problems of shaping machines by hydrogen bromide formed by the thermal decomposition thereof. When using a flame retardant having a higher thermal stability than HBCD such as tetrabromobisphenol A bis(2,3-dibromopropyl)ether, it is necessary to increase the amount of the flame retardant to achieve the same or comparable flame retardancy level with HBCD. This necessarily decreases other properties such as mechanical strength of the shaped articles.

It has been proposed to enhance the thermal stability of less heat-stable flame retardants or decrease the amount of addition needed for achieving a desired flame retardancy level with relatively heat-stable flame retardants by combining an additive effective to enhance the thermal stability or enhance the flame retarding effect of the flame retardant itself. These proposals are found in, for example, the following patent publications.

Combination of HBCD with an organotin polymer and an organic phosphorus compound having isopropylidenediphenyl group disclosed in JP 59/43060B;
combination of HBCD with an organotin compound and an alkaline earth metal soap disclosed in JP 5/24174B;
combination of HBCD with hydrotalcite disclosed in JP 2004/161868A;
combination of tetrabromobisphenol A bis(2,3-dibromopropyl)ether with pentaerythritol phosphite and/or an organotin compound disclosed in JP 5/140389A;
combination of tetrabrobisphenol A bis(2,3-dipropyl or 2,3-dibromo-2-methylpropyl)ether with a bromine-containing epoxy polymer disclosed in JP 4/292646A; and
combination of HBCD with tetrabromobisphenol A diallyl ether and barium stearate disclosed in JP 2003/301064.

The thermal stability of bromine-containing flame retardants may be assessed by determining their 5% heat loss temperature. We have found that a flame retardant having a 5% heat loss temperature in a range between 190°C and 280°C exhibits a high flame retarding effect with a small amount of addition but shows a poor heat stability causing corrosion problems of metallic parts of shaping machines, and that a flame retardant having 5% heat loss temperature in a range between 280°C to 320°C requires a relatively large amount of addition to achieve the same flame retardancy level though the thermal stability is relatively high.

A need exists, therefore, for an additive which is capable of enhancing the thermal stability for those flame retardants having 5% heat loss temperature below 280°C and, at the same time, capable of enhancing the flame retarding effect for those flame retardants having 5% heat loss temperature above 280°C. To our best knowledge, such an additive capable of enhancing both the heat stability and the flame retarding effect of the bromine-containing flame retardants at the same time has not been known until now.

### SUMMARY OF THE INVENTION

In order to satisfy with the above and other needs, the present invention provides a flame-retarded styrene-based resin composition comprising the resin, a flame retardant having a bromine content greater than 60% by weight and a 5% heat loss temperature in a range between 190°C and 320°C, said flame retardant possessing a brominated aliphatic hydrocarbon group in the molecule and a small amount of urea, thiourea or a derivative thereof. Specifically, the present invention provides a flame-retarded styrene-base resin composition comprising
(A) styrene-based resin,
(B) a flame-retardant having a bromine content greater than 60% by weight and a 5% heat loss temperature in a range between 190°C and 320°C, said flame retardant possessing a brominated aliphatic hydrocarbon group in the molecule and,
(C) a urea compound selected from the group consisting of urea, thiourea and a derivative thereof having at least one hydrocarbon group and/or an acyl group attached to the nitrogen atom, wherein the amounts of said component (B) and said component (C) per 100 parts of said component (A) are 0.5 to 10 parts and 0,05 to 0.5 part, respectively on the weight basis.

The flame-retarded composition of the present invention may optionally comprise other components in addition to said components (B) and (C).

The optional components include:
(D) phosphite and/or hindered phenol antioxidants/heat stabilizers;
(E) inorganic auxiliary flame retardants such as antimony oxide, zinc borate, hydrated aluminum oxide, magnesium hydroxide or molybdenum oxide; and
(F) phthalocyanine complexes and/or free radical generators of 2,3-dimethyl-2,3-diphenylbutane series.
The amounts of these optional components per 100 parts of (A) on the weight basis are up to 0.5 part for component (D), up to 5 parts for component (E), and up to 0.1 parts for component (F).

When the composition is used in the extrusion foaming process the composition comprises a nucleating agent such as talc, bentonite, kaolin, mica, silica, clay or diatomaceus earth in an amount up to 5 parts per 100 parts of (A).

The flame-retarded styrene-based resin composition of the present invention may be shaped typically by injection molding into a variety of flame-retarded plastic articles. When extrusion-foaming is intended, the composition containing a nucleating agent is heated into molten state in an extruder and a blowing agent is injected into the molten resin.

According to the present invention, the amount of the flame retardant (B) needed to achieve the same flame retardancy level may be decreased by the co-addition of a small amount of the urea compound (C) in comparison with the case where the urea compound (C) is not added. The advantages derived therefrom include decrease in adverse effects on the mechanical properties of the resulting shaped products and stabilization of the flame retardant against heat whereby coloring and other deteriorative effects on the shaped products and the shaping machines may be prevented.

### BEST MODE FOR CARRYING OUT OF THE INVENTION

### (A) Styrene-based resins

The styrene-based resins used in the present invention include homo- or copolymers of an aromatic vinyl monomer such as styrene, o-methylstryrene, m-methylstyrene, p-methylstyrene, 2,4-dimethylstyrene, ethylstyrene, p-tert-butylstyrene, α-methylstyrene, α-methyl-p-methylstyrene, 1,1-diphenylstyrene, p-(N,N-diethylaminomethyl)styrene, p-(N,N-diethylaminoethyl)styrene, vinylnaphthalene or vinylstyrene. Blends of the homo- and/or copolymers may also used. Polystyrene and copolymers containing greater than 50 wt.% of styrene monomer are preferred. Polystyrene is typical.
The styrene-based resins may comprise a rubbery polymer such as polybutadiene, polyisoprene, styrene-butadiene copolymer, styrene-isoprene copolymer, acrylonitrile-butadiene copolymer, butadiene-(meth)acrylate copolymer, styrene-butadiene block copolymer, butyl rubber, ethylene-α-olefin copolymer (ethylene-propylene rubber), ethylene-α-olefin-polyene copolymer(e.g.ethylene-propylene-diene rubber), silicone rubber, acrylic rubber, or hydrogenated diene rubber (e.g. hydrogenated styrene-butadiene block copolymer or hydrogenated polybutadiene). The proportion of the rubbery polymer is generally less than 30%, preferably less than 20% by weight of the sum of the vinyl aromatic monomers. The rubber modified styrene-based resins are known as high impact strength polystyrene or HIPS.

### (B) Brominated flame retardants

The term "brominated flame retardants" as used herein refers to those bromine-containing organic compounds having a bromine content greater than 60 wt.% and a 5% heat loss temperature in a range between 190°C and 320°C. These compounds possess a brominated aliphatic hydrocarbon radical in the molecule. The term "5% heat loss temperature" as used herein refers to the temperature at which 5% of the initial weight of the test sample is lost as determined on a TG-DTA analyser (Thermo Plus TG 8100, Rigaku Denki) when 10mg of the test sample is heated in the nitrogen atmosphere to 500°C at a temperature elevation rate of 10°C/min. The organic compounds having a brominated aliphatic hydrocarbon radical may be prepared, as is known in the art, by reacting hydrogen bromide with an aliphatic alcohol or by addition-reacting bromine with a procursor compound having olefinic, cyclic olefinic, allyl, methallyl or other unsaturated groups. In the bromine addition process, if a large portion of the starting unsaturated compound remains unreacted, the 5% heat loss temperature of the reaction product decreases below the lower limit and the thermal stability thereof cannot be enhanced by combining with the urea compound (C).
Examples of specific bromine-containing compounds include tetrabromocyclooctane, hexabromocyclododecane, tetrabromobisphenol A bis(2,3-dibromopropyl)ether, tetrabromobisphenol S bis(2,3-dibromopropyl)ether, tetrabromobisphenol F bis(2,3-dibromopropyl)ether, tetrabromobisphenol A bis(2-bromoethyl)ether, tetrabromobisphenol S bis(2-bromoethyl)ether, tetrabromobisphenol F bis(2-bromoethyl)ether, bisphenol A bis(2,3-dibromopropyl)ether, bisphenol S bis(2,3-dibromopropyl)ether, bisphenol F (2,3-dibromopropyl)ether, tetrabromobisphenol A bis(2,3-dibromo-2-methylpropyl)ether, tetrabromobisphenol S bis(2,3-dibromo-2-methylpropyl)ether, tetrabromobisphenol F bis(2,3-dibromo-2-methylpropyl)ether, tris(2,3-dibromopropyl)isocyanurate, tris(2,3-dibromopropyl)cyanurate, tris(2-methyl-2,3-dibromopropyl) isocyanurate, tris(2-methyl-2,3-dibromopropyl)cyanurate, bis(tribromoneopentyl)maleate, bis(tribromoneopentyl) fumarate, bis(tribromoneopentyl)adipate, bis(tribromoneopentyl)phthalate, bis(tribromoneopentyl)terephthalate, tris(tribromoneopentyl)pyromellitate, bis(2,3-dibromopropyl)phthalate, bis(2,3-dibropropyl)terephthalate, tris(2,3-dibromopropyl)pyromellitate, and tris(tribromoneopentyl)phosphate. Hexabromocyclododecane, tetrabromobisphenol A bis(2,3-dibromopropyl)ether, tetrabromobispehnol S bis(2,3-dibromopropyl)ether, tetrabromobisphenol A bis(2,3-dibromo-2-methylpropyl)ether, tetrabromobisphenol S bis(2,3-dibromo-2-methylpropyl)ether, tris(2,3-dibromopropyl)isocyanurate, and tris(tribromoneopentyl)phosphate are particularly preferable. The amount of compounent (B) is 0.5 to 10 parts, preferably 1 to 7 parts per 100 parts of (A) on the weight basis.

### (C) Urea compounds

Urea, thiourea and derivatives thereof (collectively called "urea compounds") effective to enhance the thermal stability and the flame retarding effect of the bromine-containing flame retardants include urea, thiourea and their derivatives having at least one hydrocarbon and/or acyl substituent attached to the nitrogen atom. Examples of the hydrocarbon substituents include alkyl such as methyl, ethyl, propyl or isopropyl; cycloalkyl such as cyclohexyl; alkenyl such as allyl; aryl such as phenyl; and aralkyl such as benzyl. Optionally, they may be halogenated. When both of two nitrogen atoms are substituted, the hydrocarbon substituents may join together into a cyclic alkylene linkage. Usually the acyl groups are derived from an aliphatic or aromatic carboxylic acid and include acetyl and benzoyl. Biuret may be regarded as an acylated urea with carbamic acid. Urea and thiourea have four hydrogen atoms attached to the nitrogen atoms. Therefore, mono-, di-, tri- and tetra-substituted urea and thiourea are present. When two or more substituents are present, it is possible to substitute the single molecule with both hydrocarbon and acyl groups. Specific examples of substituted urea and thiourea include, mono-, di- and tetramethylurea, mono, di- and tetramethylthiourea, mono- and diethylurea, mono- and diethylthiourea, n-butylurea, allylurea, 2-chloroethylurea, ethyleneurea, mono- and diphenylurea, mono- and diphenylthiourea, benzylurea, p-toluylurea, dicyclohexylurea, 3,4,4'-trichlorodiphenylurea, acetylurea, benzoylurea, N-acetyl-N'-methylurea, N,N-dimethyl-N'-4-chlorophenylurea, and biuret. Urea, thiourea and phenylurea are commercially available and easily obtainable. The amount of component (C) is 0,05 to 0.5 parts, preferably 0.05 to 0.3 parts per 100 parts of resin (A) on the weight basis.

### Antioxidants/heat stabilizers

Phosphite and hindered phenol compounds have been known to be effective to enhance the thermal stability of the flame retardants due to their antioxidant activities. It has also been known that combined use of a hindered phenol compound as a primary antioxidant and a phosphite or thioether compound as a secondary antioxidant is particularly effective for fully exhibiting their antioxidant activities. We have found that a phosphite or hindered phenol compound may enhance not only the thermal stability but flame retarding effect of the bromine-containing flame retardants when used in combination with the urea compound (C).
Examples of phosphite compounds include tris(2,4-di-tert-butylphenyl)phosphite, tris[2-[[2,4,8,10-tetra-tert-butyldibenzo[d,f][1,3,2]-dioxaphosphephin-6-yl]oxy]ethyl]amine, bis(2,4-di-tert-butylphenyl)pentaerythritol disphosphite, bis[2,4-bis(1,1-dimethylethyl)-6-methyl-phenyl]ethyl phosphite, tetrakis(2,4-di-tert-butylphenyl)[1,1-biphenyl]-4,4'-diyl bisphosphonite, bis(nonylphenyl) pentaerythritol diphosphite, bis-(stearyl)pentaerythritol diphosphite, bis(2,6-di-tert-butyl-4-methylphenyl) pentaerythritol diphosphite, 2,2'-methylenebis (4,6-di-tert-butyl-1-phenyloxy) (2-ethylhexyloxy)phosphorus, tetra(tridecyl)-4,4'-butylidene-bis (2-tert-butyl-5-methylphenyl) diphosphite, hexatridecyl-1,1,3-tris(3-t-butyl-6-methyl-4-oxyphenyl-3-methylpropane triphosphite, mono(dinonyl)mono-p-nonylphenyl phosphite, tris(monononylphenyl)phosphite, tetra-C₁₂-C₁₆-alkyl-4,4'-isopropylidene-(bisphenyl) diphosphite, mono- or diphenyl mono- or di-C₈-C₁₃-alkyl phosphite, diphenyl isodecylphosphite, tridecyl phosphite, and triphenylphosphite. Phosphite compounds having a phenoxy group substituted with two or more alkyl groups are preferable because they are less susceptible to hydrolysis. Examples thereof include tris(2,4-di-tert-butylphenyl)phoshpite, tris[2-[[2,4,8-10-tetra-tert-butyldibenzo[d,f][1,3,2] dioxyphosphephin-6-yl]oxy]ethyl] amine, bis(2,4-di-tert-butylphenyl)pentaerythritol diphosphite, bis[2,4-bis(1,1-dimethylethyl)-6-methylphenyl]ethyl phosphite, tetrakis(2,4-di-tert-butylphenyl)[1,1-biphenyl]-4,4'-diyl bisphosphonite, bis(2,6-di-tert-butyl-4-methylphenyl)pentaerythritol diphosphite, 2,2'-methylenebis(4,6-di-tert-butyl-1-phenyloxy) (2-ethylhexyloxy) phosphorus, tetra(tridecyl)-4,4'-butylidene-bis(2-tert-butyl-5-methylphenyl)diphosphite, hexatridecyl-1,1,3-tris (3-t-butyl-6-methyl-4-oxyphenyl)-3-methylpropane triphosphite, and mono(dinonylphenyl) mono-p-nonylphenyl phosphite.
Examples of hindered phenol compounds include 1,6-hexanediol-bis[3-(3,5-di-tert-butyl-4-hydroxyphenyl) propionate], triethyleneglycol bis [3-(3-tert-butyl-5-methyl-4-hydroxyphenyl) propionate], glycerine
tris[3-(3,5-di-tert-butyl-4-hydroxy-phenyl) propionate], pentaerythritol
tetrakis[3-(3,5-di-tert-butyl-4-hydroxy-phenyl) propionate],
octadecyl-3-(3,5-di-tert-butyl-4-hydroxyphenyl) propionate,
thioethylenebis[3-(3,5-di-tert-butyl-4-hydroxyphenyl) propionate], N,N'-hexane-1,6-diyl
bis[3-(3,5-di-tert-butyl-4-hydroxyphenyl) propionamide], 2,4-dimethyl-6-(1-methylpentadecyl) phenol, diethyl
[[3,5-bis(1,1-dimethylethyl)-4-hydroxyphenyl] methyl] phosphonate, calcium diethyl
bis[[3,5-bis(1,1-dimethylethyl)-4-hydroxyphenyl] methyl] phosphonate, 3,3',3", 5, 5',
5"-hexa-tert-butyl-a, a',
a"-(mesitylene-2,4,6-triyl)tri-p-cresol,
4,6-bis(octylthiomethyl)-o-cresol,
ethylenebis(oxyethylene)bis[3-(5-tert-butyl-4-hydroxy -m-tolyl)propionate],
1,3,5-tris(3,5-di-tert-butyl-4-hydroxybenzyl)-1,3,5-tri azine-2,4,6-(1H, 3H, 5H)trione,
1,3,5-tris[(4-tert-butyl-3-hydroxy-2,6-xylyl)methyl]-1, 3,5-triazine-2,4,6-(1H,3H,5H)-trione, and
2,6-di-tert-butyl-4-(4,6-bis(octylthio)-1,3,5-triazin-2-ylamino) phenol.
The phosphite/hindered-phenol compounds are optional. The amount thereof, if added, is up to 0.5 parts per 100 parts of resin (A) on the weight basis.

### (E) Inorganic auxiliary flame retardants

It is well-known that the flame retarding effect of a bromine-containing flame retardant is enhanced by antimony trioxyde. Other inorganic compounds having similar effect may also be used including antimony pentoxide, zinc borate, hydrated aluminum oxide, magnesium hydroxide and molybdenum oxide. Antimony trioxide is typical. The amount thereof is up to 5 parts preferably 0.5 to 2 parts per 100 parts of resin (A) on the weight basis.

### (F) Phthalocyanine complexes/free radical generators

In Japanese Patent Application No. 2004-254343 (JP 200670138A), we have disclosed a flame retardant composition comprising a bromine-containing flame retardant, a phthalocyanine metal complex and a free-radical generator of
2,3-dimethyl-2,3-diphenylbutane series. The addition of the phthalocyanine complex and the free-radical generator to the flame retardant enhances the flame-retarding effect of the flame retardant and enables to save the amount thereof needed for achieving a desired flame retardancy level. The above combination is effective in the present invention when added to the composition comprising components (A),(B) and (C).

The central metal atom of the phthalocyanine complex is a metal of group 7 to group 10 of the periodic chart. The free-radical generators are 2,3-dimethyl-2,3-diphenylbutane and its homologs in which a C₂₋₆-alkyl group is attached to the carbon atoms of position 2 and 3, respectively, in place of methyl. A combination of iron phthalocyanine and 2,3-dimethyl-2,3-diphenylbutane in a ratio from 25:75 to 75:25, particularly 50:50 is typical. The phthalocyanine complex or free-radical generator may be added alone.

The total amount thereof is up to 0.1 parts per 100 parts of resin (A).

When the composition of the present invention is used in the extrusion-foaming process, the composition may comprise (G) a nucleating agent such as talc, bentonite, kaolin, mica, silica, clay or diatomaceous earth. The amount thereof is usually up to 5 parts per 100 parts of resin (A) on the weight basis.

The flame retardant is incorporated into the resin (A) by kneading at a temperature below its 5% heat loss temperature using a twin screw extruder, Banbury mixer, laboplast mill or hot roll mill. The resulting blend is then extruded or rolled into a sheet and cut into pellets. The composition may be shaped by injection molding or compression molding into the desired shape. The additives may be blended with the resin in any order. For example, the three components (A), (B) and (C) are pre-mixed and thereafter these additives are mixed with the resin.
Foamed products may be produced using conventional blowing agents. Examples thereof include volatile organic blowing agents such as propane, butane, pentane, hexane, 1-chloro-1,1-difluroethane and other monochlorodifluoroethane, monochloro-1,2,2,2-tetrafluoroethane, 1,1-difluoroethane, 1,1,1,2-tetrafluoroethane or 1,1,3,3,3-pentafluoropropane; inorganic blowing agents such as water, nitrogen or carbon dioxide gas; and chemical blowing agents such as azo compounds. These blowing agents may be used singly or in combination. The amount thereof may vary depending upon the particular usage and foaming process and preferably in a range 0.01 to 0.5 moles, more preferably 0.05 to 0.3 moles per 100g of the resin (A).

The composition of the present invention may optionally comprises a flame retardant other than the flame retardand (B) provided that the performance of the composition is not compromised. Examples thereof include halogen-containing organic compounds, halogen-containing phosphate esters, aromatic phosphate esters, silicones and hydrated metallic compounds, typically commercially available halogen-containing organic compounds and phosphate esters, as well as silicones. They may be used singly or in combination.
Specific examples of halogen-containing organic compounds include bis(pentabromophenyl)ethane, bis(2,4,6-tribromophenoxy)ethane, ethylenebis-tetrabromophthalimide, hexabromobenzene, pentabromotoluene, poly(dibromophenylene)ether, tribromophenol, tribromophenyl allyl ether, tribromoneopentylalcohol, tetrabromobisphenol A, tetrabromobisphenol S, tetrabromobisphenol A carbonate oligmer, tetrabromobisphenol A bis(2-hydroxyethyl)ether, octabromo-trimethylphenylindane, poly(pentabromobenzyl acrylate), brominated polystyrene, brominated polyethylene, brominated polycarbonate, and perchlorocyclopentadecane.
Examples of halogen-containing phosphate esters include tris(2,3-dichloropropyl)phosphate, bis(2,3-dibromopropyl)-2,3-dichloropropylphosphate, 2,3-dibromopropyl-bis(2,3-dichloropropyl)phosphate, and tris(1,2-dichloroethyl)phosphate.
Examples of silicones include polydimethylsiloxane and polydiphenylsiloxane.

The flame retarded styrene-based resin composition of the present invention may comprise a variety of commercially available conventional additives provided they do not compromise the flame retardancy. Examples of conventional additives include heat stabilizers such as bisphenol A diglycidyl ether or organotin compounds; light stabilizers such as hindered amine stabilizers; UV absorbers such as benzotriazole compounds; UV stabilizers such as benzoate compounds; heavy metal masking agents; impact strength-improving fillers such as glass fiber or carbon fiber; pigments such as carbon black or titanium dioxide; lubricants/antidripping agent such as silicones or fluorocarbon resins; crystalline nucleating agents such as benzylidene-sorbitol or aluminum carboxylates; antistatic agents such as polyether-based surfactants; and compatibilizers.

The flame-retarded foamed products may be prepared from the flame-retarded styrene based resin composition of the present invention using the known extrusion process. The resin (A) is kneaded with the flame retardant (B), the urea compound (C) and other additives in an extruder. Then a blowing agent is injected under pressure into molten resin mixture followed by extruding the mixture through a die.

### EXAMPLES

The following Examples and Comparative Examples are offered to illustrate the present invention without limiting thereto. All parts and % are by weight unless otherwise specified.
The materials used in Examples and Comparative Examples are as follows.
(A) Styrene-based resin
   A1: HIPS available from Toyo Styrene Co., under the name of TOYO STYROL H650
   A2: GPPS available from PS Japan Co., under the name of PSJ polystyrene G9401
(B) Bromine-containing flame retardant
   B1: Hexabromocyclododecane, Br content= 75%, 5% heat loss temp. = 240°C
   B2: Tetrabromobisphenol A
      bis(2,3-dibromo-2-methylpropyl)ether, Br content =66%, 5% heat loss temp. = 265°C
   B3: Tetrabromobisphenol A
      bis(2,3-dibromopropyl)ether, Br content = 67%, 5% heat loss temp. = 295°C
   B4: Tris(tribromoneopentyl)phosphate, Br content = 69%, 5% heat loss temp. = 312°C
(C) Urea compound
C1: Urea from Tokyo Kasei Co.
C2: Thiourea from Tokyo Kasei Co.
C3: Phenyl urea from Tokyo Kasei Co.
(D) Antioxidant/Heat stabilizer
   D1: Bis(2,6-di-tert-butyl-4-methylphenyl) pentaerythritol disphosphite available from Asahi Denka Co. under the name of ADEKA STAB PEP-36
   D2: Pentaerythritol
      tetrakis[3-(3,5-di-tert-butyl-4-hydroxyphenyl)]-propionate available from Ciba Specialty Chemicals Co. under the name of IRGANOX 1010
   D3: Octadecyl-3-(3,5-di-tert-butyl-4-hydroxylphenyl)-propionate available from Ciba Specialty Chemicals Co. under the name of IRGANOX 1076
(E) Inorganic auxiliary flame retardant: Antimony trioxide
(F) Phthalocyanine complex/free radical generator
   F1: Phthalocyanine iron complex
   F2: 2,3-Dimethyl-2,3-diphenylbutane
(G) Foam nucleating agent
   G1: Talc
   G2: Bentonite
(H) Blowing agent
   Pentane

### Examples 1-7 and Comparative Examples 1-6

### 1. Preparation of test specimen

According to the formulations shown in Tables 1-3, various materials were kneaded at 200°C for 5 minutes using a hot roll mill and then comprssion molded at 200°C for 3 minutes into a sheet. Specimens having a predetermined size were prepared by cutting the resulting sheet.

### 2. Flame retardancy test

The vertical combustion method according to UL-94 standard was followed. The size of test specimen was 125mm in length, 12.5mm in width and 3.2mm in thickness. NR indicates not rating.

### 3. Heat stability test

The above sheet was cut into a specimen of 3.0 x 30cm square size. The specimen was placed between a pair of hot plate each having 3.0mm thickness, heated at 220°C for 30 minutes and then allowed to cool to room temperature.

The change of physical state of the specimen after the heat treatment was visually evaluated according the following schedule.
Good: No change in the physical state
Fair: Few number of cracks or breaks are found Not Good: Many number of large cracks are found.

The change in color of the specimen was also evaluated by determining the color difference of the specimen before and after the heat treatment to derive Δ E and ΔYI. The evaluation was judged according to the following schedule.
Good: ΔE, ΔYI<10
Not Good: ΔE, ΔYI>10
The results are shown in Tables 1-2.

The test results clearly demonstrate that the composition of the present invention (Examples 1-7) shows excellent flame retardancy and good physical state after molding while the corresponding composition free of a urea compound (Comparative Examples 1-6) shows poor physical state and becomes dark after molding.

**Table 1**

| Table 1 | | | | | | | | |
|---|---|---|---|---|---|---|---|---|
| Material (pbw) | | EXAMPLE | | | | | | |
| | | 1 | 2 | 3 | 4 | 5 | 6 | 7 |
| Resin | A-1 | 100 | 100 | 100 | 100 | 100 | 100 | 100 |
| Brominated flame retardant | B-1 | 3.0 | | | | | | |
| | B-2 | | 3.0 | | | 3.0 | 3.0 | 3.0 |
| | B-3 | | | 6.0 | | | | |
| | B-4 | | | | 6.0 | | | |
| Urea compound | C-1 | 0.15 | 0.15 | 0.15 | 0.15 | 0.20 | | |
| | C-2 | | | | | | 0.20 | |
| | C-3 | | | | | | | 0.20 |
| Heat stabilizer | E-1 | 0.02 | 0.02 | 0.02 | 0.02 | | | |
| | E-2 | 0.02 | 0.02 | 0.02 | 0.02 | | | |
| Antimony trioxide | | | | 1.0 | 1.0 | | | |
| Flame retardancy (UL-94) | | V-2 | V-2 | V-2 | V-2 | V-2 | V-2 | V-2 |
| Evaluation | State | Good | Good | Good | Good | Good | Good | Good |
| | Δ E | 3.2 | 3.7 | 2.8 | 1.5 | 3.6 | 3.6 | 3.7 |
| | Judgement | Good | Good | Good | Good | Good | Good | Good |
| | Δ YI | 4.5 | 4.7 | 3.1 | 1.6 | 4.8 | 4.9 | 4.9 |
| | Judgement | Good | Good | Good | Good | Good | Good | Good |

**Table 2**

| Table 2 | | | | | | | |
|---|---|---|---|---|---|---|---|
| Material (pbw) | | COMPARATIVE EXAMPLES | | | | | |
| | | 1 | 2 | 3 | 4 | 5 | 6 |
| Resin | A-1 | 100 | 100 | 100 | 100 | 100 | 100 |
| Brominated flame retardant | B-1 | 3.0 | | | | | |
| | B-2 | | 3.0 | | | 3.0 | 3.0 |
| | B-3 | | | 6.0 | | | |
| | B-4 | | | | 6.0 | | |
| Heat stabilizer | D-1 | | | | | 0.2 | |
| | D-2 | | | | | | 0.2 |
| Antimony trioxide | | | | 10 | 1.0 | | |
| Flame retardancy (UL-94) | | N.R. | N.R. | N.R. | N.R. | N.R. | N.R. |
| Evaluation | State | No good | No good | No good | No good | No good | No good |
| | ΔE | 13.5 | 15.2 | 10.0 | 8.6 | 14.0 | 14.3 |
| | Judgement | no good | No good | Good | Good | No good | No good |
| | ΔYI | 18.1 | 20.3 | 13.7 | 12.5 | 18.7 | 18.9 |
| | Judgement | No good | No good | No good | No good | No good | No good |

### Examples 8-22 and Comparative Examples 7-18 1. Preparation of foamed plastic specimen

According to the formulation shown in Tables 3-6, various materials other than the blowing agent were fed to a two stage tandem extruder. The materials were kneaded at 200°C in the first stage extruder having an inner diameter of 65mm and then in the second stage extruder having an inner diameter of 90mm. A predetermined amount of the blowing agent was injected under pressure into the extrudate through a separate line at the forward end of the first stage extruder. The extrudate from the first stage extruder was cooled to 120°C in the second stage extruder and extruded through a die having a width of 45mm and a thickness of 2.5mm under atmospheric pressure into a slab-like foamed product.

### 2. Visual evaluation of foamed extrudate

The state of the resulting extrudate was visually evaluated in accordance with the following criteria.
Good : A foamed extrudate free of cracks or voids is stably obtained.
Not good: The foamed extrudate includes a number of cracks or voids, or stable extrusion is not possible due to blowing of gas from the die.

### 3. Flame retardancy test

Oxygen index (LOI) was determined according to JIS K 7201 standard test.

### 4. Self-extinguishability

Yes= LOI equal to or greater than 26
No = LOI less than 26

### 5. Percent decrease of molecular weight (Mw)

The Mw of the polystyrene resin in the flame retarded resin composition was measured by the GPC analysis before and after extrusion foaming and % decrease in the weight average molecular weight (Mw) was calculated from the measured Mw before and after extrusion foaming.

The results are shown in Tables 3-6. The results clearly demonstrate that the composition of the present invention (Examples 8-22) shows excellent flame retardancy and heat stability and good physical state after extrusion, while the corresponding composition free of a urea compound (Comparative Examples 7-16) not only shows unaccceptable decrease in the Mw but does not exhibit the desired flame retardancy level and foamed state after extrusion. Comparative Example 18 demonstrates that the desired flame retardancy level may be achieved by increasing the amount of the flame retardant. However, the foamed extrudate of Comparative Example 18 included large cracks and become brownish due to the deterioration of the resin.

**Table 3**

| Table 3 | | | | | | | | |
|---|---|---|---|---|---|---|---|---|
| Material (pbw) | | EXAMPLES | | | | | | |
| | | 8 | 9 | 10 | 11 | 12 | 13 | 14 |
| Resin | A-2 | 100 | 100 | 100 | 100 | 100 | 100 | 100 |
| Brominate flame retardant | B-1 | 3.0 | | | | | | |
| | B-2 | | 3.0 | | 3.0 | 3.0 | 3.0 | 3.0 |
| | B-3 | | | 3.0 | | | | |
| Urea compound | C-1 | 0.15 | 0.15 | 0.15 | 0.15 | 0.20 | | 0.20 |
| | C-2 | | | | | | 0.20 | |
| | C-3 | | | | | | | |
| Heat stabilizer | D-1 | 0.02 | 0.02 | 0.02 | 0.02 | | | 0.07 |
| | D-2 | 0.02 | 0.02 | 0.02 | | | | |
| | D-3 | | | | 0.02 | | | |
| PC complex/ radical generator | F-1 | | | | | | | |
| | F-2 | | | | | | | |
| Foam nucleating agent | G-1 | 0.5 | 0.5 | 0.5 | 0.5 | 0.5 | 0.5 | 0.5 |
| | G-2 | 2.0 | 2.0 | 2.0 | 2.0 | 2.0 | 2.0 | 2.0 |
| Blowing agent (mol/100g) | | 0.1 | 0.1 | 0.1 | 0.1 | 0.1 | 0.1 | 0.1 |
| Physical state | | Good | Good | Good | Good | Good | Good | Good |
| Self-extinguishability | | Yes | Yes | Yes | Yes | Yes | Yes | Yes |
| Mn( × 10⁴) | | 8.82 | 9.03 | 9.28 | 9.32 | 9.03 | 8.93 | 9.08 |
| Mw( × 10⁵) | | 2.62 | 2.60 | 2.63 | 2.59 | 2.59 | 2.59 | 2.61 |
| Mw/Mn | | 2.95 | 2.88 | 2.83 | 2.82 | 2.91 | 2.95 | 2.90 |
| % decrease in Mw | | 2 | 3 | 2 | 3 | 3 | 3 | 3 |

**Table 4**

| Table 4 | | | | | | | | |
|---|---|---|---|---|---|---|---|---|
| Material (pbw) | | EXAMPLES | | | | | | |
| | | 16 | 17 | 18 | 19 | 20 | 21 | 22 |
| Resin | A-2 | 100 | 100 | 100 | 100 | 100 | 100 | 100 |
| Brominate flame retardant | B-1 | | | | | | | |
| | B-2 | 3.0 | 3.0 | 2.5 | 2.5 | 2.5 | 2.5 | 2.5 |
| | B-3 | | | | | | | |
| Urea compound | C-1 | 0.20 | | 0.15 | | | 0.15 | 0.15 |
| | C-2 | | 0.10 | | 0.15 | | | |
| | C-3 | | | | | 0.15 | | |
| Heat stabilizer | D-1 | | 0.05 | 0.02 | 0.02 | 0.02 | 0.02 | 0.02 |
| | D-2 | 0.07 | 0.05 | 0.02 | 0.02 | 0.02 | 0.02 | 0.02 |
| | D-3 | | | | | | | |
| PC complex/ radical generator | F-1 | | | 0.01 | 0.01 | 0.01 | 0.03 | |
| | F-2 | | | 0.01 | 0.01 | 0.01 | | 0.03 |
| Foam nucleating agent | G-1 | 0.5 | 0.5 | 0.5 | 0.5 | 0.5 | 0.5 | 0.5 |
| | G-2 | 2.0 | 2.0 | 2.0 | 2.0 | 2.0 | 2.0 | 2.0 |
| Blowing agnet (mol/100g) | | 0.1 | 0.1 | 0.1 | 0.1 | 0.1 | 0.1 | 0.1 |
| Physical state | | Good | Good | Good | Good | Good | Good | Good |
| Self-extinguishability | | Yes | Yes | Yes | Yes | Yes | Yes | Yes |
| Mn( × 10⁴) | | 9.11 | 9.00 | 9.14 | 9.22 | 9.29 | 9.13 | 9.07 |
| Mw( × 10⁵) | | 2.62 | 2.61 | 2.63 | 2.61 | 2.61 | 2.59 | 2.60 |
| Mw/Mn | | 2.89 | 2.92 | 2.88 | 2.85 | 2.83 | 2.88 | 2.90 |
| % decrease in Mw | | 2 | 3 | 2 | 3 | 3 | 3 | 3 |

**Table 5**

| Table 5 | | | | | | | | |
|---|---|---|---|---|---|---|---|---|
| Material (pbw) | | COMPARATIVE EXMPLES | | | | | | |
| | | 7 | 8 | 9 | 10 | 11 | 12 | 13 |
| Resin | A-2 | 100 | 100 | 100 | 100 | 100 | 100 | 100 |
| Brominated flame retardant | B-1 | | | 3.0 | | | 3.0 | |
| | B-2 | | | | 3.0 | | | 3.0 |
| | B-3 | | | | | 3.0 | | |
| Heat stabilizer | D-1 | | | | | | 0.3 | 0.3 |
| | D-2 | | | | | | | |
| | D-3 | | | | | | | |
| Foam nucleating agent | G-1 | | 0.5 | 0.5 | 0.5 | 0.5 | 0.5 | 0.5 |
| | G-2 | | 2.0 | 2.0 | 2.0 | 2.0 | 2.0 | 2.0 |
| Blowing agent (mol/100g) | | 0.1 | 0.1 | 0.1 | 0.1 | 0.1 | 0.1 | 0.1 |
| Physical state | | Not good | Not good | Good | Not good | Good | Not good | Not good |
| Self-extinguishabiity | | No | No | Yes | No | No | Yes | No |
| Mn( × 10⁴) | | 9.03 | 8.57 | 7.86 | 7.34 | 8.01 | 808 | 7.99 |
| Mw( × 10⁵) | | 2.63 | 2.40 | 2.01 | 1.82 | 2.15 | 2.18 | 2.15 |
| Mw/Mn | | 2.89 | 2.80 | 2.56 | 2.48 | 2.68 | 2.70 | 2.69 |
| % decrease in Mw | | 2 | 10 | 25 | 32 | 20 | 19 | 20 |

**Table 6**

| Table 6 | | | | | | |
|---|---|---|---|---|---|---|
| Material (pbw) | | COMPARATIVE EXMPLES | | | | |
| | | 14 | 15 | 16 | 17 | 18 |
| Resin | A-2 | 100 | 100 | 100 | 100 | 100 |
| Brominated flame retardant | B-1 | | | | | |
| | B-2 | | 3.0 | 3.0 | 3.0 | |
| | B-3 | 3.0 | | | | 7.0 |
| Heat stabilizer | D-1 | 0.3 | | | 0.2 | 0.3 |
| | D-2 | | 0.3 | | 0.2 | |
| | D-3 | | | 0.3 | | |
| Foam nucleating agent | G-1 | 0.5 | 0.5 | 0.5 | 0.5 | 0.5 |
| | G-2 | 2.0 | 2.0 | 2.0 | 2.0 | 2.0 |
| Blowing agent (mol/100g) | | 0.1 | 0.1 | 0.1 | 0.1 | 0.1 |
| Physical state | | Good | Not good | Not good | Not good | Not good |
| Self-extinguishability | | No | No | No | No | Yes |
| Mn( × 10⁴) | | 8.60 | 8.11 | 7.88 | 8.06 | 8.99 |
| Mw( × 10⁵) | | 2.41 | 2.13 | 2.15 | 2.13 | 2.60 |
| Mw/Mn | | 2.80 | 2.63 | 2.73 | 2.64 | 2.89 |
| % decrease in Mw | | 10 | 21 | 20 | 21 | 3 |

According to the present invention, it is possible to provide a flame-retarded styrene-based resin composition and a molded or foamed article thereof have excellent flame retardancy and heat stability as well as excellent mechanical properties.

## Claims

1. A flame-retarded styrene-based resin comprising:
(A) a styrene-based resin,
(B) 0.5 to 10 parts by weight per 100 parts by weight of the resin (A) of a bromine-containing flame retardant having a bromine content greater than 60 wt.% and a 5% heat loss temperature in a range between 190°C and 320°C as determined on a TG-DTA analyser upon heating a sample in the nitrogen atmosphere to 500°C at a temperature elevation rate of 10°C/min said flame retardant possessing a brominated aliphatic hydrocarbon group in the molecule, and
(C) 0.05 to 0.5 parts by weight per 100 parts by weight of the resin (A) of a compound selected from the group consisting of urea, thiourea and a derivative thereof having at least one hydrocarbon and/or an acyl substituent attached to an amino nitrogen atom thereof.

2. The flame retarded styrene-based resin composition according to claim 1 wherein the amount of said component (B) and (C) per 100 parts of said resin (A) are 1 to 7 parts by weight and 0.05 to 0.3 parts by weight, respectively.

3. The flame retarded styrene-based resin composition according to claim 1 or 2 wherein said flame retardant (B) is selected from the group consisting of tetrabromocyclooctane, hexabromocyclododecane, tetrabromobisphenol A, S or F bis(2,3-dibromopropyl)ether, tetrabromobisphenol A, S or F bis(2,3-dibromo-2-methylpropyl)ether, tris(2,3-dibromopropyl)isocyanurate, tris(2,3-dibromopropyl)cyanurate, tris(tribromoneopentyl)phosphate, and a mixture of thereof.

4. The flame-retarded styrene-based resin composition according to one of claims 1-3 further comprising up to 0.5 parts by weight per 100 parts by weight of said resin (A) of (D) an antioxidant/heat stabilizer of phosphite and/or hindered phenol series.

5. The flame-retarded styrene-based resin composition according to one of claims 1-4 further comprising up to 5 parts by weight per 100 parts by weight of said resin (A) of (E) an inorganic auxiliary flame retardant selected from the group consisting of antimony oxide, zinc borate, hydrated aluminum oxide, magnesium hydroxide and molybdenum oxide.

6. The flame-retarded styrene-based resin composition according to one of claims 1-4 further comprising up to 0.1 parts by weight in total per 100 parts by weight of said resin (A) of (F) a phthalocyanine complex and/or a radical generator of 2,3-dimethyl-2,3-diphenylbutane series.

7. The flame retarded styrene-based resin composition according to one of claims 1-6 further comprising up to 5 parts by weight per 100 parts by weight of said resin (A) of (G) a foam nucleating agent selected from the group consisting of talc, bentonite, kaolin, mica, silica, clay, diatomaceus earth and a mixture thereof.

8. A shaped article produced from the flame-retarded styrene-based resin composition according to one of claims 1-6.

9. A foamed article produced from the flame-retarded styrene-based resin composition of claim 7 by extruding molten composition while injecting a blowing agent under pressure.

## Patentansprüche

1. Flammwidriges Harz auf Styrolbasis, umfassend:
(A) ein Harz auf Styrolbasis,
(B) 0,5 bis 10 Gewichtsteile pro 100 Gewichtsteile des Harzes (A) eines bromhaltigen Flammschutzmittels mit einem Bromgehalt größer als 60 Gew.-% und einer 5%-heat-loss-Temperatur im Bereich zwischen 190 °C und 320 °C, bestimmt mit einem TG-DTA-Analysator durch Erhitzen einer Probe in Stickstoffatmosphäre auf 500 °C bei einer Rate der Temperaturerhöhung von 10 °C/min, wobei das Flammschutzmittel eine bromierte aliphatische Kohlenwasserstoffgruppe im Molekül besitzt, und
(C) 0,05 bis 0,5 Gewichtsteile pro 100 Gewichtsteile des Harzes (A) einer Verbindung, die ausgewählt ist aus der Gruppe, bestehend aus Harnstoff, Thioharnstoff und einem Derivat davon mit mindestens einem Kohlenwasserstoff-und/oder einem Acyl-Substituenten, der an ein Amino-Stickstoffatom davon gebunden ist.

2. Flammwidrige Styrol-basierte Harzzusammensetzung nach Anspruch 1, wobei die Menge der Komponenten (B) und (C) pro 100 Teile des Harzes (A) 1 bis 7 Gewichtsteile bzw. 0,05 bis 0,3 Gewichtsteile beträgt.

3. Flammwidrige Styrol-basierte Harzzusammensetzung nach Anspruch 1 oder 2, wobei das Flammschutzmittel (B) ausgewählt ist aus der Gruppe, bestehend aus Tetrabromcyclooctan, Hexabromcyclododecan, Tetrabrombisphenol A, S oder F, Bis-(2,3-dibrompropyl)ether, Tetrabrombisphenol A, S oder F, Bis(2,3-dibrom-2-methylpropyl)ether, Tris(2,3-dibrompropyl)isocyanurat, Tris (2,3-dibrompropyl)cyanurat, Tris(tribromneopentyl)phosphat und einem Gemisch davon.

4. Flammwidrige Styrol-basierte Harzzusammensetzung nach einem der Ansprüche 1-3, weiterhin umfassend bis zu 0,5 Gewichtsteile pro 100 Gewichtsteile des Harzes (A) an (D) einem Antioxidans/Wärmestabilisator vom Typ Phosphit und/oder gehindertes Phenol.

5. Flammwidrige Styrol-basierte Harzzusammensetzung nach einem der Ansprüche 1-4, ferner umfassend bis zu 5 Gewichtsteile pro 100 Gewichtsteile des Harzes (A) an (E) einem anorganischen Hilfsflammschutzmittel, ausgewählt aus der Gruppe, bestehend aus Antimonoxid, Zinkborat, Aluminiumoxidhydrat, Magnesium-hydroxid und Molybdänoxid.

6. Flammwidrige Styrol-basierte Harzzusammensetzung nach einem der Ansprüche 1- 4, ferner insgesamt umfassend bis zu 0,1 Gewichtsteile pro 100 Gewichtsteile des Harzes (A) an (F) einem Phthalocyaninkomplex und/oder einem Radikalbildner vom 2,3-Dimethyl-2,3-diphenylbutan-Typ.

7. Flammwidrige Styrol-basierte Harzzusammensetzung nach einem der Ansprüche 1 - 6, ferner umfassend bis zu 5 Gewichtsteile pro 100 Gewichtsteile des Harzes (A) an (G) einem Schaumnukleierungsmittel, ausgewählt aus der Gruppe, bestehend aus Talk, Bentonit, Kaolin, Glimmer, Silica, Ton, Kieselgur und einem Gemisch davon.

8. Formteil, hergestellt aus der flammwidrigen Styrol-basierte Harzzusammensetzung nach einem der Ansprüche 1 - 6.

9. Geschäumter Artikel, hergestellt aus der flammwidrigen Styrol-basierten Harzzusammensetzung nach Anspruch 7 durch Extrudieren der geschmolzenen Zusammensetzung, während ein Treibmittel unter Druck eingespritzt wird.

## Revendications

1. Composition de résine ignifuge à base de styrène comportant :
(A) une résine à base de styrène,
(B) de 0,5 à 10 parties en poids, pour 100 parties en poids de la résine(A), d'un agent ignifuge bromé à teneur en brome supérieure à 60 % en poids et présentant une perte thermique de 5 % dans un intervalle de températures comprises entre 190° C et 320° C déterminée selon un analyseur ATG-ATD par chauffage d'un échantillon, sous atmosphère d'azote, jusqu'à une température de 500° C selon une vitesse d'accroissement de température de 10° C par minute, ledit agent ignifuge comportant un groupe hydrocarbure aliphatique bromé dans sa molécule, et
(C) de 0,05 à 0,5 partie en poids, pour 100 parties en poids de la résine (A), d'un composé qui est choisi parmi le groupe comprenant l'urée, la thiourée, ou un dérivé homologue et présentant au moins un substituant hydrocarboné et/ou acyle fixé sur un atome d'azote d'un groupe aminé.

2. Composition de résine ignifuge à base de styrène selon la revendication 1, dans laquelle la quantité des constituants (B) et (C) est respectivement de 1 à 7 parties en poids et de 0,05 à 0,3 partie en poids, pour 100 parts de résine (A).

3. Composition de résine ignifuge à base de styrène selon la revendication 1 ou 2, dans laquelle l'agent ignifuge (B) est choisi parmi le groupe constitué du tétrabromocyclooctane, du hexabromocyclododecane, du tétrabromobisphénol A, S ou F bis(2,3-dibromopropyl)éther, du tétrabromobisphénol A, S ou F bis (2,3-dibromo-2-méthylpropyl)éther, du tris(2,3-dibromopropyl)isocyanurate, du tris(2,3-dibromopropyl)cyanurate, du tris(tribromonéopentyl)phosphate, et de leurs mélanges.

4. Composition de résine ignifuge à base de styrène selon l'une quelconque des revendications 1 à 3, comportant en outre, pour 100 parties en poids de ladite résine (A), jusqu'à 0,5 partie en poids de (D) un agent antioxydant/stabilisant thermique du type phosphite et/ou phénol encombré.

5. Composition de résine ignifuge à base de styrène selon l'une des revendications 1 à 4 comportant en outre, pour 100 parties en poids de ladite résine (A), juqu'à 5 % en poids de (E) un agent ignifuge auxiliaire minéral choisi dans le groupe comprenant l'oxyde d'antimoine, le borate de zinc, l'hydroxyde d'aluminium hydraté, l'hydroxyde de magnésium et l'oxyde de mobyldène.

6. Composition de résine ignifuge à base de styrène selon l'une des revendications 1 à 4 comportant en outre, pour 100 parties en poids de ladite résine (A), jusqu'à 0,1 partie en poids au total de (F) un complexe de phtalocyanine et/ou un promoteur radicalaire de la famille du 2,3-diméthyt-2,3-diphénylbutane.

7. Composition de résine ignifuge à base de styrène selon l'une des revendications 1 à 6 comportant en outre, pour 100 parties en poids de ladite résine (A), jusqu'à 5 parties en poids de (G) un agent dé nucléation moussant choisi dans le groupe comprenant le talc, la bentonite, le kaolin, le mica, la silice, l'argile, la terre de diatomées et leurs mélanges.

8. Article moulé obtenu à partir de la composition de résine ignifuge à base de styrène suivant l'une des revendications 1 à 6.

9. Article expansé obtenu à partir de la composition ignifuge à base de styrène suivant la revendication 7 par extrusion de ladite composition à l'état fondu sous injection sous pression d'un agent gonflant.
